# FASCICULE DE BREVET EUROPEEN

(11) **EP 1 726 423 B1**
(45) Date de publication et mention de la délivrance du brevet: **10.08.2011**
(21) Numéro de dépôt: 05291128.6
(22) Date de dépôt: 26.05.2005
(51) Int. Cl.: B29C 33/06, B60G 21/055

(54) **Dispositif et procédé de moulage de palier d'élastomère sur une barre stabilisatrice**
Vorrichtung und Verfahren zum Spritzgiessen eines Elastomerlagers auf einen Stabilisationsstab
Device for and method of moulding an elastomeric bearing on a stabilising rod

(43) Date de publication de la demande: 29.11.2006
(73) Titulaire: ALLEVARD REJNA AUTOSUSPENSIONS, 92210 Saint-Cloud (FR)
(72) Inventeur: Noullez, Philippe, 59148 Flines-Lez-Raches (FR)
(74) Mandataire: Barbin le Bourhis, Joël

(56) Documents cités:
- WO-A-96/22181
- US-A- 5 935 476
- PATENT ABSTRACTS OF JAPAN vol. 007, no. 044 (M-195), 22 février 1983 (1983-02-22) & JP 57 193340 A (AKIRA WASHIDA), 27 novembre 1982 (1982-11-27)

## Description

La présente invention est relative à un procédé de moulage de palier d'élastomère sur une barre stabilisatrice et à un dispositif permettant de mettre en oeuvre un tel procédé. Les barres stabilisatrices sont utilisées dans les suspensions pour véhicule automobile. Reliée par levier à la suspension de chaque roue d'un même essieu, chaque barre stabilisatrice également dite barre antiroulis est fixée à la caisse ou au berceau de suspension du véhicule par deux paliers d'articulation élastiques.

De telles barres stabilisatrices sont généralement fabriquées à partir d'une barre d'acier forgé conformée pour réaliser de façon monobloc, à la fois les leviers et la partie rectiligne de chaque barre. Les paliers d'articulation élastiques qui entourent des portions de barre sont, quant à eux, réalisés en élastomère ou parfois en polyuréthane et sont enfermés dans un boîtier fixé à la caisse ou au berceau de suspension.

Selon un mode de réalisation connu, les paliers sont moulés sur la barre de la manière suivante : d'abord, on préchauffe la barre stabilisatrice grâce à des moyens de chauffage. La barre préchauffée est ensuite disposée entre les plateaux d'une presse à injection, au travers d'un moule susceptible de ménager autour d'une portion de barre un espace vide fermé de la forme du palier à réaliser. Des résistances électriques chauffantes, placées au contact du moule, chauffent ce dernier par conduction de chaleur. On injecte alors une composition comprenant au moins un élastomère à l'intérieur de l'espace vide fermé précité et, sous l'effet de la chaleur, la composition se réticule pour former le palier.

Pour solidariser les paliers aux portions de barre concernées, on enduit généralement ces portions, avant que la composition ne soit injectée dans le moule, d'un agent d'adhérisation qui permet au palier d'adhérer à la barre. Sous l'effet de la chaleur, cet agent va se réticuler tout en formant des liaisons avec les chaînes d'élastomère de la composition.

Ladite composition comprend généralement du caoutchouc naturel (du caoutchouc synthétique peut également être utilisé) auquel peuvent être ajoutés des agents réticulants, des accélérateurs, des plastifiants... Dans le cas du caoutchouc, la réticulation des chaînes de polymère est une vulcanisation.

On comprend que le chauffage du moule et le préchauffage de la barre sont déterminants car ils permettent, d'une part, d'apporter la chaleur nécessaire à la réticulation de la composition et donc à la formation du palier, et d'autre part, d'apporter la chaleur nécessaire à la réticulation de l'agent d'adhérisation et donc à la fixation des paliers sur la barre.

Il est généralement connu de chauffer un moule par induction, voir par exemple WO 96/22181.

Selon un procédé connu, le temps nécessaire à la réalisation des paliers d'élastomère est compris entre cinq et sept minutes.

La présente invention se propose d'augmenter la cadence de fabrication de paliers d'élastomère en diminuant le temps nécessaire à la réticulation de la composition et de l'agent d'adhérisation éventuel.

Dans ses recherches ayant abouti à l'invention, la demanderesse a constaté que la lenteur de la réticulation dans le procédé connu s'expliquait principalement par le fait qu'une fois la composition injectée, la faible conductivité thermique de cette composition empêchait la chaleur de se propager du moule vers la barre. Le préchauffage de la barre, se révélait alors insuffisant pour fournir la chaleur nécessaire à la réticulation rapide de la partie de la composition située à proximité de la barre, trop éloignée du moule pour pouvoir être chauffée, et à la réticulation de l'agent d'adhérisation éventuellement utilisé.

La présente invention a pour objet un procédé de moulage de palier d'élastomère sur une barre stabilisatrice, caractérisé en ce qu'on dispose une barre stabilisatrice à travers un moule apte à ménager autour d'une première portion de cette barre un espace vide fermé de la forme dudit palier, on injecte une composition comprenant au moins un élastomère à l'intérieur dudit espace vide, on réticule à chaud ladite composition en chauffant par induction le moule et en chauffant ladite première portion de barre à l'aide de moyen de chauffage par induction disposés autour d'au moins une deuxième portion de barre, située à l'extérieur du moule, et on démoule le palier obtenu après réticulation de la composition.

Le fait de ne plus simplement préchauffer la première portion de barre mais de la chauffer après injection de la composition, permet d'apporter une quantité de chaleur supplémentaire pour réticuler rapidement la partie de la composition la plus éloignée du moule, et l'agent d'adhérisation éventuel.

La composition injectée dans le moule est ainsi suffisamment chauffée de l'intérieur, par la première portion de barre et, de l'extérieur, par le moule pour que la réticulation se déroule plus rapidement qu'avec le procédé de fabrication connu, précédemment décrit. La demanderesse a ainsi réussi à diviser sensiblement par deux la durée de réticulation pour l'amener au-dessous des trois minutes.

D'autre part, on notera que l'invention utilise l'induction comme technique de chauffage. Grâce à cette technique, on amène rapidement et facilement le moule et la première portion de barre à la température souhaitée, de même qu'on peut, par la suite, faire varier cette température avec précision et rapidité.

Avantageusement, on chauffe, au moins en partie, la première portion de barre stabilisatrice par conduction de chaleur de la (ou des) deuxième(s) portion(s) vers la première portion de barre.

Il n'est pas exclu de chauffer la première portion de barre en partie par induction en faisant en sorte qu'elle soit traversée par un flux magnétique variable, au moins à ses extrémités.

Selon un mode particulier de mise en oeuvre de l'invention, le moule et la deuxième portion de barre stabilisatrice sont chauffés avant injection de la composition.

Avantageusement, pour faciliter et renforcer la fixation du palier d'élastomère sur la première portion de barre, on dispose sur cette dernière un agent d'adhérisation avant d'injecter la composition dans le moule.

Avantageusement encore, on utilise des moyens de chauffage par induction différents pour chauffer le moule et la deuxième portion de barre et on peut contrôler indépendamment lesdits moyens de chauffage par induction.

On peut ainsi régler indépendamment la température du moule et de la barre, ce qui permet d'optimiser les conditions de réticulation de la composition et de l'agent d'adhérisation. Par exemple, on règle les moyens de chauffage par induction de sorte que les températures du moule et de la portion de barre soient comprises entre 160°C et 220°C et de préférence, comprises entre 180°C et 200°C.

Ces plages de températures, dans la pratique, se révèlent bien adaptées à la majorité des élastomères et des agents de réticulation généralement utilisés et, plus particulièrement, au caoutchouc naturel et aux agents de réticulation compatibles avec ce dernier.

La présente invention a également pour objet un dispositif servant à mettre en oeuvre le procédé décrit ci-dessus. Un tel dispositif pour mouler un palier d'élastomère sur une barre comprend un moule apte à ménager autour d'une première portion de barre stabilisatrice un espace vide fermé de la forme dudit palier, un injecteur pour injecter une composition comprenant au moins un élastomère à l'intérieur dudit espace vide, des premiers moyens de chauffage par induction pour chauffer ledit moule et des deuxièmes moyens de chauffage par induction pour chauffer au moins une deuxième portion de barre située à l'extérieur du moule et au voisinage de ce dernier.

Les avantages d'un tel dispositif sont bien entendu analogues à ceux du procédé précédemment décrit. En outre, comme les premiers et les deuxièmes moyens de chauffage sont situés dans le même dispositif, à proximité l'un de l'autre, l'espace occupé par ce dispositif est inférieur à celui occupé par les installations de type connu, dans lesquelles les moyens de préchauffage de la barre et les moyens de chauffage du moule sont répartis sur deux sites distincts.

Selon un mode particulier de réalisation du dispositif, les deuxièmes moyens de chauffage sont disposés de part et d'autre dudit moule. Ainsi, la première portion est chauffée au moins en partie, voire intégralement, par conduction de la chaleur provenant des portions de barre qui l'entourent, ce qui améliore le chauffage.

Les différentes caractéristiques et principaux avantages de l'invention seront mieux compris à la lecture du mode de réalisation particulier d'un dispositif selon l'invention donné à titre d'exemple et illustré par les figures suivantes :
- la figure 1 est une vue extérieure avant du dispositif comprenant deux demi-ensembles traversés par deux barres stabilisatrices, chaque demi-ensemble comprenant un support, un demi-inducteur et une demi-coquille ;
- la figure 2 est une vue en coupe du dispositif de la figure 1 selon le plan II, lorsque les deux demi-ensembles sont assemblés ;
- la figure 3 est une vue extérieure des deux demi-inducteurs de la figure 1 ; et
- la figure 4 est une vue extérieure des deuxièmes moyens, arrière, de chauffage par induction comprenant un demi-inducteur noyé dans une base en résine.

Le dispositif conforme à l'invention représenté sur les figures est destiné au moulage simultané de deux paliers en élastomère 10 sur deux barres stabilisatrices cambrées 12. Ce dispositif comprend des premiers moyens de chauffage par induction 22 qui comprennent deux demi-inducteurs 22a et 22b reliés à un premier générateur électrique haute fréquence, non représenté, et des deuxièmes moyens de chauffage par induction 40a, 40b, qui sont formés chacun par au moins un élément conducteur 41a, 41b de configuration ondulée relié également à un générateur électrique haute fréquence.

Le dispositif comprend également des moyens de contrôle, non représentés, pour contrôler indépendamment l'un de l'autre les premiers 22 et deuxièmes 40a, 40b moyens de chauffage par induction.

Le dispositif comprend en outre un moule, formé de deux demi-coquilles 14a et 14b, solidarisées à leur support respectif 16a et 16b. Ces supports sont eux-mêmes respectivement fixés aux plateaux inférieur 18a et supérieur 18b d'une presse à injection par tout moyen de fixation approprié, par exemple par vissage. Pour éviter tout échauffement de ces supports 16a et 16b par induction, on les choisit, avantageusement, non-conducteurs (isolants).

Lesdits supports 16a et 16b présentent sur leur côté des entretoises 20 aptes à maintenir chaque support à distance de sa demi-coquille associée 14a, 14b. Un espace est ainsi ménagé entre le support et sa demi-coquille. A l'intérieur ce cet espace, est logé un des deux demi-inducteurs 22a, 22b.

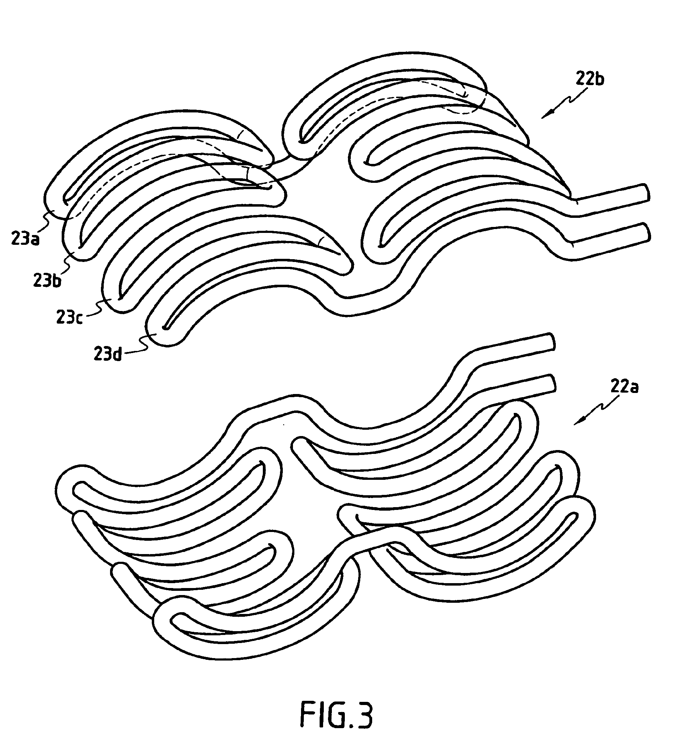

Les deux demi-inducteurs 22a, 22b, sont représentés en détail figure 3. Ils résultent chacun de la mise en forme particulière d'un élément conducteur, en l'occurrence un tube de métal. Le tube est d'abord plié de manière à lui conférer une configuration ondulée reprenant approximativement l'allure générale d'une sinusoïde, l'amplitude ou hauteur des ondulations étant nettement supérieure à leur largeur. Si on considère uniquement la partie du demi-inducteur 22b représentée à gauche sur la figure 3, on dénombre quatre ondulations 23a, 23b, 23c, et 23d. Après avoir plié le tube, on lui donne une forme complémentaire de celle de la paroi extérieure d'une demi-coquille 14a ou 14b, de sorte que ce tube enveloppe cette dernière sans pour autant être à son contact. Dans le cas présent, la paroi extérieure des demi-coquilles 14a, 14b et les demi-inducteurs 22a, 22b sont de forme hémicylindrique, le rayon de chaque demi-inducteur étant supérieur à celui de la paroi extérieure de sa demi-coquille associée.

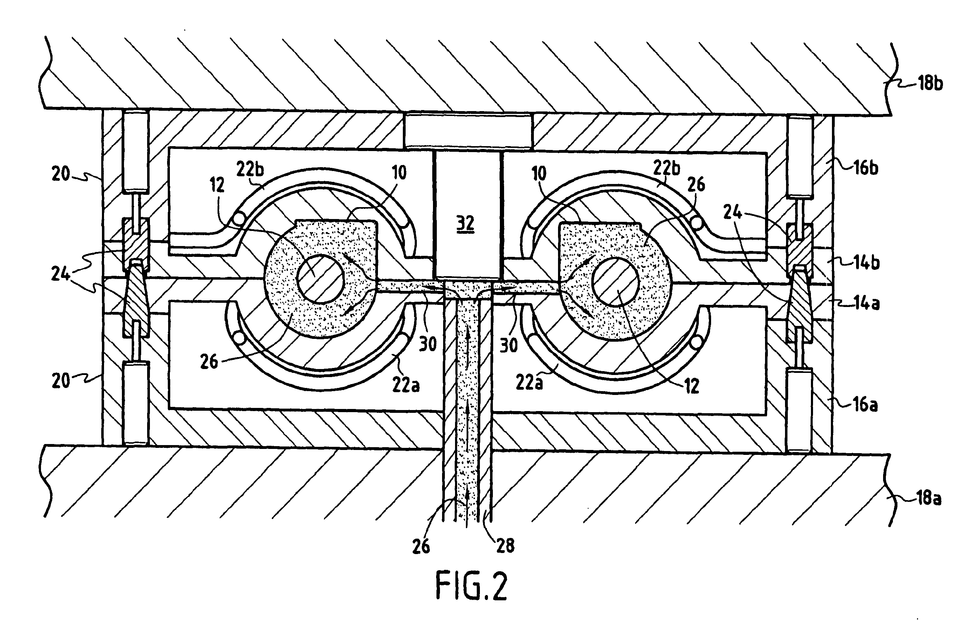

Comme représenté figure 2, une fois rassemblés, les deux demi-inducteurs 22a, 22b, forment deux bobines inductrices susceptibles de donner naissance à des courants induits au sein des demi-coquilles 14a, 14b.

La barre et le moule mentionnés dans la présente demande sont réalisés en métal ou en alliage conducteur, et sont susceptibles d'être parcourus par des courants électriques induits générés par les variations du champ magnétique créé par les inducteurs, ces courants induits étant à l'origine de leur échauffement.

Les deuxièmes moyens de chauffage par induction 40a, 40b, sont situés à l'extérieur du moule et au voisinage de ce dernier, de chaque côté de celui-ci. On distingue ainsi les deuxièmes moyens de chauffage avant 40a et arrière 40b, qui comprennent chacun un élément conducteur 41a et 41b de configuration ondulée. Les deux éléments 41a et 41b, dans l'exemple, présentent des configurations différentes qui sont fonction de la géométrie des deuxièmes portions (avant et arrière) de barre stabilisatrice 15a et 15b que ces éléments entourent, au moins partiellement.

Comme les éléments conducteurs des demi-inducteurs 22a et 22b, les éléments conducteurs 41a, 41b des deuxièmes moyens de chauffage 40a et 40b sont des tubes en métal, en cuivre par exemple, pliés de manière à leur conférer des configurations particulières. De préférence, les élément conducteur 41a et 41b enveloppent respectivement plus d'une moitié de la périphérie extérieure des deuxièmes portions de barre 15a et 15b.

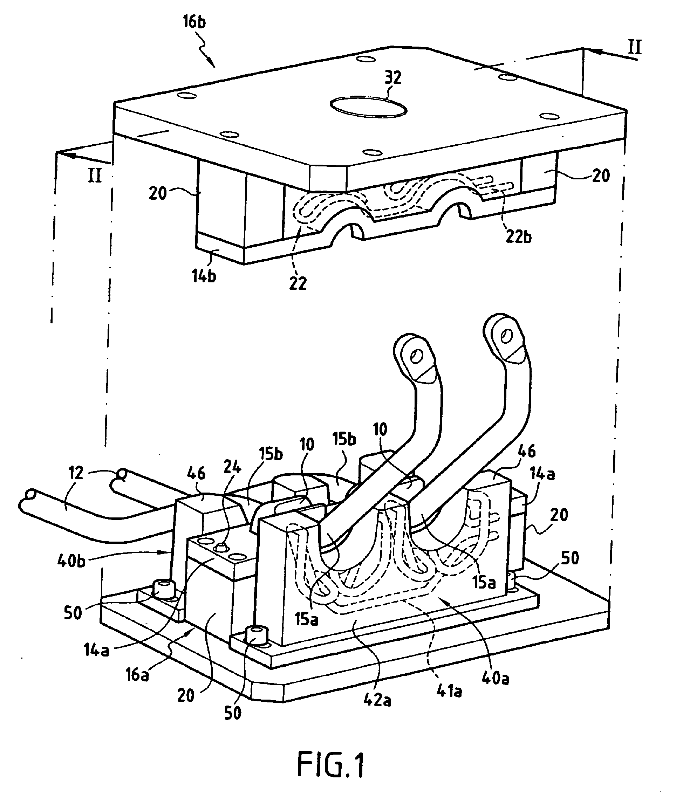

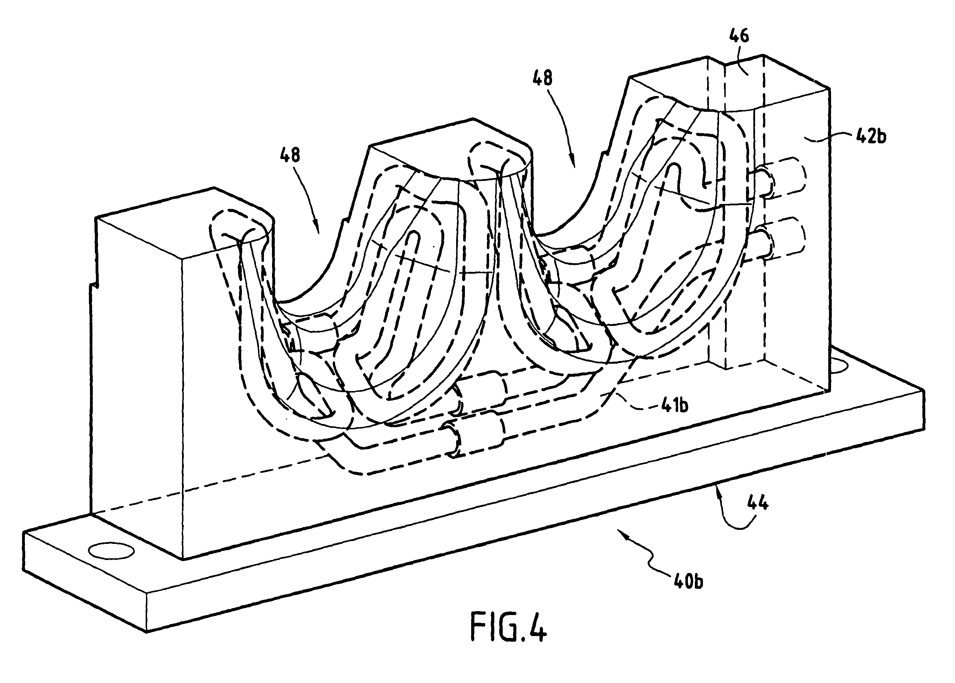

Des configurations particulières des éléments conducteurs 41a, 41b, ayant donné satisfaction sont représentées sur les figures 1 et 4 à titre d'exemples. La représentation de ces configurations, en tant que telle, est considérée comme une caractéristique protégée.

Les tubes formant les premiers et deuxièmes moyens de chauffage étant eux-mêmes parcourus par des courants induits et sujets à un phénomène d'échauffement, un fluide de refroidissement circule à l'intérieur de ces tubes.

Comme représenté figures 1 et 4, les éléments conducteurs 41a et 41b sont tous les deux noyés dans une base 42a, 42b réalisée en résine. Dans la pratique, on moule chaque base 42a, 42b autour de son élément conducteur respectif 41a, 41b. Chaque base en résine présente une face inférieure 44 destinée à reposer sur le plateau inférieur 18a de la presse à injection, et une face supérieure 46 sur laquelle sont ménagées deux échancrures 48 destinées à recevoir les deuxièmes portions de barre 15b (sans toutefois être au contact de ces dernières). La forme des éléments conducteurs 41a et 41b suit celle des échancrures 48 de sorte que ces éléments se situent juste sous la surface des échancrures 48.

Dans l'exemple, chaque base en résine 42a, 42b est solidarisée au plateau inférieur 18a de la presse au niveau de sa face inférieure 44 à l'aide de vis 50. On notera que ces bases pourraient de la même manière être solidarisées au plateau supérieur 18b.

En outre, des moyens de centrage 24 sont prévus sur chaque demi-coquille 14a, 14b de manière à assurer un positionnement correct de ces coquilles l'une par rapport à l'autre, lorsque les plateaux de la presse 18a et 18b, solidaires des demi-coquilles 14a et 14b, sont rapprochés autour de la barre 12. Ces moyens comprennent au moins un ergot de forme tronconique disposé sur les bords de l'une des deux demi-coquilles 14a, qui vient s'encastrer à l'intérieur d'une cavité de forme complémentaire présente sur l'autre demi-coquille 14b.

D'autre part, un injecteur 28, à l'intérieur duquel on injecte la composition 26 comprenant au moins un élastomère, débouche au centre d'une des deux demi-coquilles 14a. Deux canaux 30 diamétralement opposés, reliant l'orifice circulaire de l'injecteur 28 aux deux espaces vides fermés ménagés autour des barres 12 par les demi-coquilles 14a, 14b, permettent de répartir ladite composition 26 à l'intérieur de chacun des deux espaces. Une butée 32, prenant appui sur le plateau supérieur 18b de la presse à injection, traverse l'autre demi-coquille 14b et se situe en face de l'orifice de l'injecteur 28, de manière à former contre réaction d'injection. La présence de cette butée 32 permet d'éviter toute déformation de la demi-coquille 14b qu'elle traverse, qui serait liée à l'injection de la composition 26.

La structure du dispositif précédemment décrit étant bien comprise, il convient d'évoquer maintenant les différentes étapes d'un exemple de procédé de moulage mis en oeuvre à l'aide d'un tel dispositif.

D'abord, on recouvre les premières portions 13 de deux barres stabilisatrices 12 sur lesquelles ont souhaite solidariser des paliers d'élastomère, d'un agent d'adhérisation compatible avec la barre et l'élastomère choisi.

Ensuite, on glisse ces deux barres 12 entre les plateaux inférieur 18a et supérieur 18b de la presse à injection et on dispose les premières portions 13 de ces barres au travers des deux espaces prévus à cet effet dans la demi-coquille 14a.

Les plateaux 18a, 18b sont ensuite amenés en contact de sorte que les demi-coquilles 14a et 14b entourent chaque première portion 13 de barre et créent autour de cette première portion 13 un espace vide fermé de la forme du palier à mouler.

Les deux générateurs électriques reliés respectivement aux demi-inducteurs 22a, 22b et aux éléments conducteurs 41a, 41b des deuxièmes moyens de chauffage 40a, 40b, sont alors réglés de sorte que chaque demi-coquille du moule et chaque deuxième portion 15a, 15b de barre stabilisatrice soit chauffée par induction, avant injection de la composition 26 à mouler.

Le moule est chauffé par induction tandis que la première portion 13 de barre est chauffée par conduction de la chaleur provenant des deuxièmes portions 15a, 15b chauffées par induction. Pour limiter les pertes de chaleur lors de la conduction, il est évidemment souhaitable, si les formes de la barre et du moule le permettent (comme c'est le cas dans l'exemple de dispositif représenté), que les deuxièmes portions 15a et 15b de la barre, soient situées le plus près possible de la première portion 13 de barre.

Une composition 26 comprenant au moins un élastomère est ensuite injectée, par le biais de l'injecteur 28 et des deux canaux 30, à l'intérieur desdits espaces vides fermés.

Les premiers et deuxièmes moyens de chauffage continuent de chauffer les barres 12 et les demi-coquilles 14a, 14b pendant et après l'injection de la composition 26, de manière à favoriser la réticulation de la composition et de l'agent d'adhérisation. L'apport de chaleur étant bien adapté aux besoins en énergie des réactions endothermiques de réticulation, la durée de ces réactions est optimisée.

Une fois ces réactions terminées, les plateaux 18a, 18b de la presse s'écartent et les barres stabilisatrices 12 autour desquelles des paliers 10 viennent d'être moulés, sont retirées pour laisser la place à de nouvelles barres qui vont à leur tour être chauffées avant injection de la composition 26.

## Revendications

1. Procédé de moulage de palier (10) d'élastomère sur une barre stabilisatrice (12), **caractérisé en ce qu'**on dispose une barre stabilisatrice (12) à travers un moule (14a, 14b) apte à ménager autour d'une première portion (13) de cette barre un espace vide fermé de la forme dudit palier, on injecte une composition (26) comprenant au moins un élastomère à l'intérieur dudit espace vide, on réticule à chaud ladite composition (26) en chauffant par induction le moule (14a, 14b) et en chauffant ladite première portion (13) de barre à l'aide de moyens de chauffage par induction disposés autour d'au moins une deuxième portion (15a, 15b) de barre, située à l'extérieur du moule (14a, 14b), et on démoule le palier (10) obtenu après réticulation de la composition (26).

2. Procédé selon la revendication 1, **caractérisé en ce qu'**on chauffe, au moins en partie, ladite première portion (13) de barre stabilisatrice (12) par conduction de chaleur de la deuxième portion (15a, 15b) vers la première portion (13) de barre.

3. Procédé selon la revendication 1 ou 2, **caractérisé en ce qu'**on chauffe par induction ledit moule (14a, 14b) et ladite deuxième portion (15a, 15b) de barre stabilisatrice (12), avant injection de ladite composition (26).

4. Procédé selon l'une des revendications 1 à 3, **caractérisé en ce qu'**on dispose sur ladite première portion (13) de barre stabilisatrice (12) un agent d'adhérisation, avant d'injecter ladite composition (26).

5. Procédé selon l'une des revendications 1 à 4, **caractérisé en ce qu'**on utilise des moyens de chauffage par induction (22, 40a, 40b) différents pour chauffer ledit moule (14a, 14b) et ladite deuxième portion (15a, 15b) de barre stabilisatrice (12).

6. Procédé selon la revendication 5, **caractérisé en ce qu'**on contrôle indépendamment lesdits moyens de chauffage par induction (22, 40a, 40b).

7. Procédé selon la revendication 5 ou 6, **caractérisé en ce qu'**on contrôle lesdits moyens de chauffage par induction (22, 40a, 40b) de sorte que les températures du moule (14a, 14b) et de la première portion (13) de barre (12) soient comprises entre 160°C et 220°C.

8. Dispositif pour mouler un palier (10) d'élastomère sur une barre stabilisatrice (12), **caractérisé en ce qu'**il comprend un moule (14a, 14b) apte à ménager autour d'une première portion (13) de barre stabilisatrice (12) un espace vide fermé de la forme dudit palier (10), un injecteur (28) pour injecter une composition (26) comprenant au moins un élastomère à l'intérieur dudit espace vide, des premiers moyens de chauffage par induction (22) pour chauffer ledit moule (14a, 14b) et des deuxièmes moyens de chauffage par induction (40a, 40b) pour chauffer au moins une deuxième portion (15a, 15b) de barre (12) située à l'extérieur du moule (14a, 14b) et au voisinage de ce dernier.

9. Dispositif selon la revendication 8, **caractérisé en ce que** lesdits deuxièmes moyens de chauffage par induction (40a, 40b) sont disposés de part et d'autre dudit moule (14a, 14b).

10. Dispositif selon la revendication 8 ou 9, **caractérisé en ce qu'**il comprend, en outre, des moyens de contrôle pour contrôler indépendamment l'un de l'autre lesdits premiers (22) et deuxièmes (40a, 40b) moyens de chauffage par induction.

11. Dispositif selon l'une quelconque des revendications 8 à 10, **caractérisé en ce que** ledit moule est formé de deux demi-coquilles (14a, 14b) et **en ce que** lesdits premiers moyens de chauffage par induction (22) comprennent deux demi-inducteurs (22a, 22b) formés chacun par un élément conducteur de configuration ondulée et enveloppant respectivement la paroi extérieure de chaque demi-coquilles (14a, 14b).

12. Dispositif selon la revendication 11, **caractérisé en ce qu'**il comprend en outre deux supports non-conducteurs (16a, 16b) associés auxdites deux demi-coquilles (14a, 14b), qui présentent sur leurs côtés des entretoises (20) aptes à maintenir chaque support (16a, 16b) à distance de sa demi-coquille associée (14a, 14b), et **en ce que** chaque demi-inducteur (22a, 22b) précité est logé entre l'un des deux supports et sa demi-coquille associée.

13. Dispositif selon la revendication 12, **caractérisé en ce que** chaque support (16a, 16b) est solidaire d'un plateau (18a, 18b) d'une presse à injection.

14. Dispositif selon l'une des revendications 11 à 13, **caractérisé en ce que** ledit injecteur (28) traverse l'une des demi-coquilles (14a, 14b), une butée (32) formant contre réaction d'injection étant située sur l'autre demi-coquille, en face dudit injecteur (28).

15. Dispositif selon l'une des revendications 8 à 14, **caractérisé en ce que** lesdits deuxièmes moyens de chauffage par induction (40a, 40b) comprennent au moins un élément conducteur (41a, 41b) de configuration ondulée, cet élément conducteur entourant au moins partiellement la deuxième portion (15a, 15b) de barre stabilisatrice (12).

16. Dispositif selon l'une des revendications 11 à 15, **caractérisé en ce que** l'élément conducteur des premiers et/ou des deuxièmes moyens de chauffage est un tube de métal à l'intérieur duquel circule un liquide apte à refroidir ledit tube.

17. Dispositif selon la revendication 15 et l'une quelconque des revendications 8 à 16, **caractérisé en ce qu'**il comprend, en outre, au moins une base en résine (42a, 42b) à l'intérieure de laquelle l'élément conducteur (41a, 41b) des deuxièmes moyens de chauffage (40a, 40b) est noyé.

18. Dispositif selon les revendications 13 et 17, **caractérisé en ce que** ladite base en résine (42a, 42b) est solidaire de l'un des deux plateaux (18a, 18b) de la presse à injection.

## Claims

1. A method of molding an elastomer bearing onto a stabilizer bar (12), **characterized in that** a stabilizer bar (12) is placed across a mold (14a, 14b) suitable for leaving a closed empty space having the shape of said bearing around a first portion (13) of said bar; a composition (26) is injected comprising at least one elastomer into said empty space; said composition (26) is hot-cured by induction heating the mold (14a, 14b) and by heating said first portion (13) of the bar by using induction heating means disposed around at least one second portion (15a, 15b) of said bar that is situated outside the mold (14a, 14b); and unmolding the resulting bearing (10) after the composition (26) has been cured.

2. A method according to claim 1, **characterized in that** said first portion (13) of the stabilizer bar (12) is heated, at least in part, by heat conduction from the second portion (15a, 15b) towards the first portion (13) of the bar.

3. A method according to claim 1 or 2, **characterized in that** said mold (14a, 14b) and said second portion (15a, 15b) of the stabilizer bar (12) are heated by induction prior to injecting said composition (26).

4. A method according to any one of claims 1 to 3, **characterized in that** a bonding agent is deposited on said first portion (13) of the stabilizer bar (12) prior to injecting said composition (26).

5. A method according to any one of claims 1 to 4, **characterized in that** different induction heating means (22, 40a, 40b) are used for heating said mold (14a, 14b) and for heating said second portion (15a, 15b) of the stabilizer bar (12).

6. A method according to claim 5, **characterized in that** said induction heating means (22, 40a, 40b) are controlled independently.

7. A method according to claim 5 or 6, **characterized in that** said induction heating means (22, 40a, 40b) are controlled in such a manner that the temperatures of the mold (14a, 14b) and of the first portion (13) of the bar (12) lie in the range 160°C to 220°C.

8. A device for molding an elastomer bearing (10) on a stabilizer bar (12), **characterized in that** the apparatus comprises a mold (14a, 14b) suitable for leaving a closed empty space having the shape of said bearing (10) around a first portion (13) of stabilizer bar (12), an injector (28) for injecting a composition (26) comprising at least one elastomer into said empty space, first induction heating means (22) for heating said mold (14a, 14b), and second induction heating means (40a, 40b) for heating at least one second portion (15a, 15b) of the bar (12) situated outside the mold (14a, 14b) and in the vicinity thereof.

9. A device according to claim 8, **characterized in that** said second induction heating means (40a, 40b) are disposed on either side of said mold (14a, 14b).

10. A device according to claim 8 or 9, **characterized in that** it further comprises control means for controlling said first (22) and second (40a, 40b) induction heating means independently of each other.

11. A device according to any one of claims 8 to 10, **characterized in that** said mold is made up of two half-shells (14a, 14b), and wherein said first induction heating means (22) comprise two half-inductors (22a, 22b) each formed by a conductor element of undulating configuration enveloping the outside wall of a respective one of the half-shells (14a, 14b).

12. A device according to claim 11, **characterized in that** it further comprises non-conductive supports (16a, 16b) associated with said half-shells (14a, 14b), the support presenting on their sides spacers (20) suitable for maintaining each support (16a, 16b) at a distance from the associated half-shell (14a, 14b), and wherein each above-mentioned half-inductor (22a, 22b) is housed between one of the two supports and the associated half-shell.

13. A device according to claim 12, **characterized in that** each support (16a, 16b) is secured to a plate (18a, 18b) of an injection press.

14. A device according to any one of claims 11 to 13, **characterized in that** said injector (28) passes through one of the half-shells (14a, 14b), with an abutment '32) forming a reaction against injection being situated on the other half-shell, facing said injector (28).

15. A device according to any one of claims 8 to 14, **characterized in that**said second induction heating means (40a, 40b) comprise at least one conductor element (41a, 41b) of undulating configuration, said conductor element surrounding at least part of the second portion (15a, 15b) of stabilizer bar (12).

16. A device according to any one of claims 11 to 15, **characterized in that** the conductor element of the first and/or second heating means is/are constituted by a metal tube having a liquid flowing therein that is suitable for cooling said tube.

17. A device according to claim 15 and any one of claims 8 to 16, **characterized in that** it further comprises at least one resin base (42a, 42b) having the conductor element (41a, 41b) of the second heating means (40a, 40b) embedded therein.

18. A device according to claims 13 and 17, **characterized in that** said resin base (42a, 42b) is secured to one of the two plates (18a, 18b) of the injection press.

## Patentansprüche

1. Verfahren zum Anformen eines Elastomerlagers (10) an eine Stabilisierungsstange (12), **dadurch gekennzeichnet, daß** eine Stabilisierungsstange (12) durch eine Form (14a, 14b) hindurch angeordnet wird, die geeignet ist, um einen ersten Abschnitt (13) dieser Stange einen geschlossenen Hohlraum mit der Form des Lagers auszubilden, eine Zusammensetzung (26), die wenigstens ein Elastomer umfaßt, in den Hohlraum eingespritzt wird, die Zusammensetzung (26) **dadurch** heißvernetzt wird, daß die Form (14a, 14b) mittels Induktion erhitzt wird und daß der erste Abschnitt (13) der Stange mit Hilfe von Induktionsheizmitteln, die um wenigstens einen außerhalb der Form (14a, 14b) gelegenen zweiten Stangenabschnitt (15a, 15b) herum angeordnet sind, erhitzt wird, und das nach dem Vernetzen der Zusammensetzung (26) erhaltene Lager (10) ausgeformt wird.

2. Verfahren nach Anspruch 1, **dadurch gekennzeichnet, daß** der erste Abschnitt (13) der Stabilisierungsstange (12) durch Wärmeleitung von dem zweiten Abschnitt (15a, 15b) in Richtung des ersten Stangenabschnitts (13) wenigstens teilweise erhitzt wird.

3. Verfahren nach Anspruch 1 oder 2, **dadurch gekennzeichnet, daß** die Form (14a, 14b) und der zweite Abschnitt (15a, 15b) der Stabilisierungsstange (12) vor Einspritzen der Zusammensetzung (26) mittels Induktion erhitzt wird.

4. Verfahren nach einem der Ansprüche 1 bis 3, **dadurch gekennzeichnet, daß** an dem ersten Abschnitt (13) der Stabilisierungsstange (12) ein Haftvermittler angeordnet wird, bevor die Zusammensetzung (26) eingespritzt wird.

5. Verfahren nach einem der Ansprüche 1 bis 4, **dadurch gekennzeichnet, daß** unterschiedliche Induktionsheizmittel (22, 40a, 40b) verwendet werden, um die Form (14a, 14b) und den zweiten Abschnitt (15a, 15b) der Stabilisierungsstange (12) zu erhitzen.

6. Verfahren nach Anspruch 5, **dadurch gekennzeichnet, daß** die Induktionsheizmittel (22, 40a, 40b) unabhängig kontrolliert werden.

7. Verfahren nach Anspruch 5 oder 6, **dadurch gekennzeichnet, daß** die Induktionsheizmittel (22, 40a, 40b) kontrolliert werden, so daß die Temperaturen der Form (14a, 14b) und des ersten Abschnitts (13) der Stange (12) im Bereich zwischen 160 °C und 220 °C liegen.

8. Vorrichtung zum Anformen eines Elastomerlagers (10) an eine Stabilisierungsstange (12), **dadurch gekennzeichnet, daß** sie eine Form (14a, 14b) umfaßt, die geeignet ist, um einen ersten Abschnitt (13) der Stabilisierungsstange (12) einen geschlossenen Hohlraum mit der Form des Lagers (10) auszubilden, eine Einspritzdüse (28), um eine Zusammensetzung (26), die wenigstens ein Elastomer umfaßt, in den Hohlraum einzuspritzen, erste Induktionsheizmittel (22), um die Form (14a, 14b) zu erhitzen, sowie zweite Induktionsheizmittel (40a, 40b), um wenigstens einen außerhalb der Form (14a, 14b) und in deren Nähe gelegenen zweiten Abschnitt (15a, 15b) der Stange (12) zu erhitzen.

9. Vorrichtung nach Anspruch 8, **dadurch gekennzeichnet, daß** die zweiten Induktionsheizmittel (40a, 40b) auf beiden Seiten der Form (14a, 14b) angeordnet sind.

10. Vorrichtung nach Anspruch 8 oder 9, **dadurch gekennzeichnet, daß** sie ferner Kontrollmittel umfaßt, um die ersten (22) und zweiten (40a, 40b) Induktionsheizmittel unabhängig voneinander zu kontrollieren.

11. Vorrichtung nach einem der Ansprüche 8 bis 10, **dadurch gekennzeichnet, daß** die Form von zwei Halbformen (14a, 14b) gebildet ist und daß die ersten Induktionsheizmittel (22) zwei Halbinduktoren (22a, 22b) umfassen, die jeweils von einem gewellt gestalteten leitenden Element, das jeweils die Außenwand einer jeden Halbform (14a, 14b) umgibt, gebildet sind.

12. Vorrichtung nach Anspruch 11, **dadurch gekennzeichnet, daß** sie ferner zwei nichtleitende, den beiden Halbformen (14a, 14b) zugeordnete Träger (16a, 16b) umfaßt, die an ihren Seiten Distanzstücke (20) aufweisen, welche geeignet sind, jeden Träger (16a, 16b) im Abstand von seiner zugeordneten Halbform (14a, 14b) zu halten, und daß jeder vorgenannte Halbinduktor (22a, 22b) zwischen einem der beiden Träger und seiner zugeordneten Halbform gelagert ist.

13. Vorrichtung nach Anspruch 12, **dadurch gekennzeichnet, daß** jeder Träger (16a, 16b) mit einer Platte (18a, 18b) einer Spritzgießmaschine fest verbunden ist.

14. Vorrichtung nach einem der Ansprüche 11 bis 13, **dadurch gekennzeichnet, daß** die Einspritzdüse (28) eine der Halbformen (14a, 14b) durchquert, wobei ein eine Einspritzgegenreaktion bildender Anschlag (32) an der anderen Halbform gegenüber der Einspritzdüse (28) angeordnet ist.

15. Vorrichtung nach einem der Ansprüche 8 bis 14, **dadurch gekennzeichnet, daß** die zweiten Induktionsheizmittel (40a, 40b) wenigstens ein gewellt gestaltetes leitendes Element (41 a, 41 b) umfassen, wobei dieses leitende Element wenigstens teilweise den zweiten Abschnitt (15a, 15b) der Stabilisierungsstange (12) umgibt.

16. Vorrichtung nach einem der Ansprüche 11 bis 15, **dadurch gekennzeichnet, daß** das leitende Element der ersten und/oder der zweiten Heizmittel ein Metallrohr ist, in dem eine Flüssigkeit zirkuliert, die geeignet ist, das Rohr zu kühlen.

17. Vorrichtung nach Anspruch 15 und einem der Ansprüche 8 bis 16, **dadurch gekennzeichnet, daß** sie ferner wenigstens einen Harzsockel (42a, 42b) umfaßt, in den das leitende Element (41 a, 41 b) der zweiten Heizmittel (40a, 40b) eingebettet ist.

18. Vorrichtung nach den Ansprüchen 13 und 17, **dadurch gekennzeichnet, daß** der Harzsockel (42a, 42b) mit einer der beiden Platten (18a, 18b) der Spritzgießmaschine fest verbunden ist.
